Europäisches Patentamt

(19) European Patent Office

Office européen des brevets

(11) Publication number: **0 297 546 B1**

# (12) EUROPEAN PATENT SPECIFICATION

(45) Date of publication of patent specification :
04.09.91 Bulletin 91/36

(51) Int. Cl.⁵: **F02M 69/00, F02M 51/02, G05D 16/06**

(21) Application number: **88110384.0**

(22) Date of filing: **29.06.88**

(54) **Fuel pressure regulator for internal combustion engine.**

(30) Priority: **29.06.87 JP 161667/87**

(43) Date of publication of application:
**04.01.89 Bulletin 89/01**

(45) Publication of the grant of the patent:
**04.09.91 Bulletin 91/36**

(84) Designated Contracting States:
**DE FR GB IT**

(56) References cited:
**EP-A- 0 072 034
US-A- 4 184 465
US-A- 4 220 129**

(73) Proprietor: **MITSUBISHI DENKI KABUSHIKI KAISHA
2-3, Marunouchi 2-chome Chiyoda-ku
Tokyo 100 (JP)**

(72) Inventor: **Asayama, Yoshiaki
Mitsubishi Denki K.K. Himeji Seisakusho
840 Chiyoda-cho - Himeji - Hyogo (JP)**

(74) Representative: **Lehn, Werner, Dipl.-Ing. et al
Hoffmann, Eitle & Partner Patentanwälte
Arabellastrasse 4
W-8000 München 81 (DE)**

## Description

BACKGROUND OF THE INVENTION

The present invention relates to a fuel pressure regulator for use in an electronically controlled fuel injection device of an internal combustion engine and, particularly, to such regulator capable of varying pressure of fuel supplied to a fuel injection valve arbitrarily according to an operating condition of the engine.

A conventional fuel pressure regulator used in a fuel injection device of an internal combustion engine mounted on an automobile etc. includes a valve member supported by a diaphram serving a pressure receiving plane for fuel supplied under pressure by a pump, a valve seat associated therewith, a first chamber defined by the diaphram and mounting the valve member and the valve seat and a spring having a predetermined mounting load mounted in a second chamber defined by the diaphram for biasing the valve member toward the valve seat. The second chamber is communicated to atomosphere or to a suction tube, so that, when fuel pressure exceeds a preset value, the valve member is separated from the valve seat against the spring force and, otherwise, the valve member is urged to the valve seat to close a passage, resulting in a constant fuel pressure in the first chamber. The preset value is usually regulated to 2 to 3 $Kg/cm^2$. Therefore, the mounting load of the spring is not less than 10 Kg since it is a product of the fuel pressure and a pressure receiving area of the diaphram.

Therefore, in order to vary the preset pressure value according to the operating condition of engine, it has to change the mounting load of the spring which is as large as 10 Kg as proposed in, for example, Japanese Patent Application Laid-open No. 132068/1985. An electromagnetic device capable of directly performing such change is very large in size and so it is practically very difficult to employ such proposition for a vehicle mounted device.

US-A-4220129 describes a fuel injection system for a mixture compressing externally ignited internal combustion engine including a flow sensing member arranged in an air intake duct, the member moving in accordance with the quantity of air flowing through the duct so as to actuate a fuel dispensing valve and to dispense a quantity of fuel to fuel injection nozzles of the engine. The pressure difference in the dispensing valve is maintained constant by means of a pressure sensitive valve and a differential pressure control valve. The differential pressure control valve has two chambers separated from each other by a rigid wall and include two diaphragms arranged parallel to each other. The diaphragms are maintained at a fixed spacing from each other by a bolt and both diaphragms are actuated by springs which urge the diaphragms against each other. The loading stresses of the springs can be varied according to engine operating parameters and can be adjusted by devices for full load fuel concentration and cold-starting fuel concentration, and also a device responsive to air pressure changes. The bolt is hollow and allows fuel to bypass to the fuel tank along its central duct. The bolt functions as a distance piece and does not form a valve seat with either of the diaphragms.

US-A-4184465 describes a fuel injection device disposed in a fuel supply passageway and adapted to control the amount of injection by controlling the opening time and/or opening area of a gate controlled in connection with engine rpm and the amount of suction air. The difference between the fuel supply pressure and the negative pressure in a suction pipe is maintained constant by a pressure regulator. The device contains a mechanism for compensating fuel supply pressure according to fuel temperature. The pressure regulator consists of an upper chamber divided into two further sub-chambers by a diaphragm. The upper of these two sub-chambers includes a compression spring urging the diaphragm downwards, this sub-chamber being connected to the suction pipe. The lower of the two sub-chambers is connected to the fuel pump. A lower sub-chamber and a lower chamber are connected by a tubular rod which forms a valve seat with diaphragm. The tubular rod is biased by a spring bimetallic strip which is in contact with the fuel flowing through the regulator.

SUMMARY OF THE INVENTION

An object of the present invention is to provide a fuel pressure regulator capable of easily changing fuel pressure.

A further object of the present invention is to provide a fuel pressure regulator capable of preventing the vapour-lock problem.

According to the present invention, the above objects can be achieved by a fuel pressure regulator for an internal combustion engine for regulating fuel pressure to be supplied to a fuel injection valve, comprising a valve member supported by a first diaphragm providing a pressure receiving plane for pressure of fuel supplied by a fuel pump under pressure, a first cylindrical valve seat for on-off controlling, together with said valve member, a fuel recirculating passage to a fuel tank, a tube element supported slidably axially by said first cylindrical valve seat, means for moving said tube element in a moving direction of said diaphragm according to an operating condition of said engine, a cover member for supporting said diaphragm and forming an air chamber, a first spring means provided between a bottom of said cover member and said valve member for biasing said valve member towards said first valve seat **characterized** by said tube element forming a second cylindrical valve seat for said valve member, and a second spring means having one end supported by said bottom of said cover member for biasing said valve member in an opposite direction to a direction of movement of said second valve seat together with said valve member when the latter pushes the other end of said second spring means.

The fuel pressure regulator according to the present invention regulates a first fuel pressure by a relative movement of the valve member to the first valve seat and a second fuel pressure by a relative movement of the valve member to the second valve seat.

## BRIEF DESCRIPTION OF THE DRAWING

Fig. 1 is a cross section of an embodiment of the present invention ; and

Fig. 2 is a cross section of a main portion of the embodiment in Fig. 1, showing an operation of a second spring thereof.

## DETAILED DESCRIPTION OF THE PREFERRED EMBODIMENT

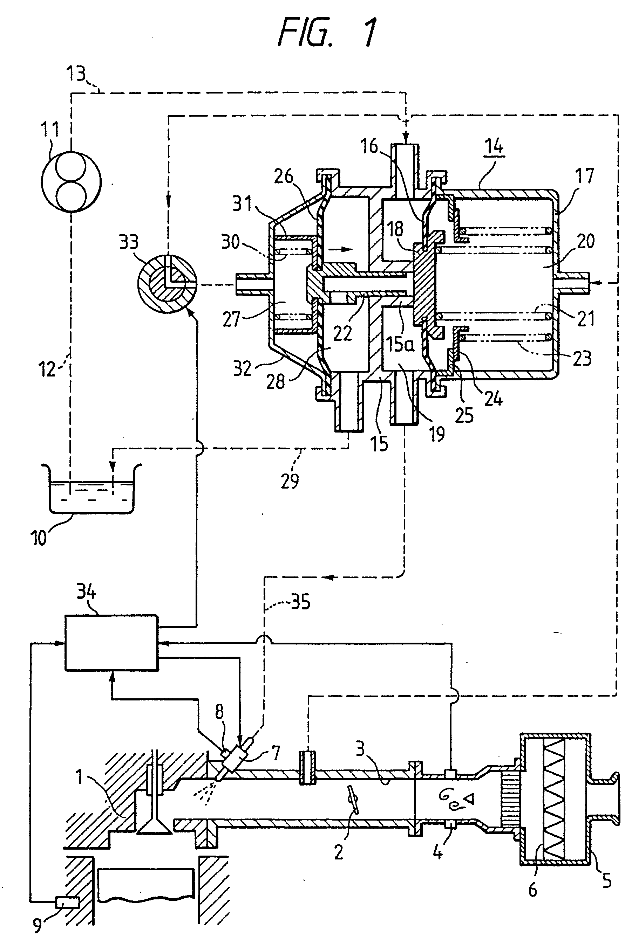

In Fig. 1 which shows an embodiment of the present invention in cross section, a reference numeral 1 depicts an internal combustion engine, 2 a throttle valve ganged with an acceleration pedal of an automobile, 3 a suction tube, 4 an air flow sensor for detecting an amount of air introduced into the engine 1, 5 an air cleaner, 6 a cleaning element housed in the air cleaner 5 and 7 a fuel injection valve for injecting fuel supplied under pressure to the engine in synchronism with an engine rotation. A reference numeral 8 depicts a temperature sensor for detecting temperature of the fuel injection valve 7, 9 a revolution detector for detecting the engine revolution, 10 a fuel tank, 11 a fuel pump coupled through a pipe 12 to the fuel tank 10, 13 a pipe connected to a discharge side of the fuel pump 11 and 14 a fuel pressure regulator.

The fuel pressure regulator 14 includes a housing having a cylinder portion 15. A partition wall is formed in the cylinder portion, which is formed with a center hole and with a first cylindrical vavle seat 15a protruding axially from a periphery of the center hole. A first diaphram 16 receives fuel supplied under pressure from the fuel pump 11 and is supported by the cylinder portion 15 and a cover 17 pressure-fitted to an opening of the cylinder portion 15. A valve member 18 is supported by the diaphram 16 in such a way that it can be moved together with the first diaphram 16 axially.

A first chamber 19 defined in the cylinder portion 15 by the first diaphram 16 in one side thereof is communicated with the fuel pump 11 through the pipe 13 and forms a fuel pressure regulation chamber. A second chamber 20 defined in the cylinder portion 15 by the first diaphram 16 in the other side thereof, i.e., on the side of the cover 17, is communicated to the suction tube 3. A first spring 21 is provided in the second chamber 20 for biasing the valve member 18 against the first valve seat 15a. A second spring 23 is disposed outside the first spring 21 in the second chamber 20 and held between a bottom of the cover 17 and a spring receiver 24 in compressed state with a predetermined load. The spring receiver 24 abutts a spring stopper 25 fitted in an inner periphery of the cover 17 so that the second spring 23 is held compressed. The first valve seat 15a supports a cylindrical second valve seat 22 slidably axially of the moving direction of the first diaphram 16. A second diaphram 26 is disposed such that it closes the other opening of the cylinder portion 15 and moves the second valve seat 22 according to pressure of an air chamber 27 disposed in an opposite position to an overflow chamber 28 to be described. The second diaphram 26 supports one end of the second valve seat 22 such that an outlet of the second valve seat 22 is positioned in the overflow chamber 28. The overflow chamber 28 defined in the cylinder portion 15 by the second diaphram 26 is commincated with the fuel tank 10 through an overflow pipe 29.

A reference numeral 30 depicts an air chamber spring for biasing the second diaphram 26 in a direction shown by an arrow, 31 a stopper for limiting a movement of the second diaphram 26 in the opposite direction to the arrow and 32 an air chamber cover for supporting, together with the other opening of the cylinder portion 15, the second diaphram 26 to form the above mentioned air chamber 27.

An electromagnetic switch valve 33 is provided for introducing pressure of the suction tube 3 or atomospheric pressure into the air chamber 27. An electronic control device 34 is also provided which is responsive to output signals from the air flow sensor 4, the revolution detector 9 and the temperature sensor 8 to drive and control the fuel injection valve 7 and the electromagnetic switch valve 33. A reference numeral 35 depicts a pipe for supplying fuel whose pressure is regulated in the first chamber 19 to the fuel injection valve 7.

In operation, when the engine 1 is started, air flows through the air cleaner 5 and, after amount thereof is detected by the air flow sensor 4, is introduced into the engine 1 through the suction pipe 3. On the other hand, fuel in the fuel tank 10 is supplied under pressure to the first chamber 19 by the pump 11. When the engine 1 is started, pressure of the air chamber 27 communicated with the suction tube 3 is lowered. Therefore, the second diaphram 26 is moved together with the second valve seat 22 against the air chamber spring 30 in the opposite direction to the arrow and thus the valve member 18 is urged to the first valve seat 15a by the first spring 21 as shown in Fig. 1. When fuel pressure in the first chamber 19 exceeds a predetermined value, the diaphram 16 moves against spring force of the first spring 21 and so the valve member 18 is separated from the first valve seat 15a, so that high pressure fuel is allowed to flow through a hollow portion of the second valve seat 22, the overflow chamber 28 and the overflow pipe 29 to the fuel tank 10 to lower pressure of the first chamber 19. Upon the lowered pressure in the first chamber 19, the valve member 18 is made in contact with the first valve seat 15a again to stop the overflow. Thus, fuel pressure in the first chamber 19 is maintained at a first preset value determined by the first spring 21. Pressure-regulated fuel is supplied through the pipe 35 to the fuel injection valve 7 and injected thereby. In order to maintain fuel pressure at the preset value by using pressure in the suction tube 3 as a reference, the reference pressure is introduced into the second chamber 20 and received by the first diaphram 16.

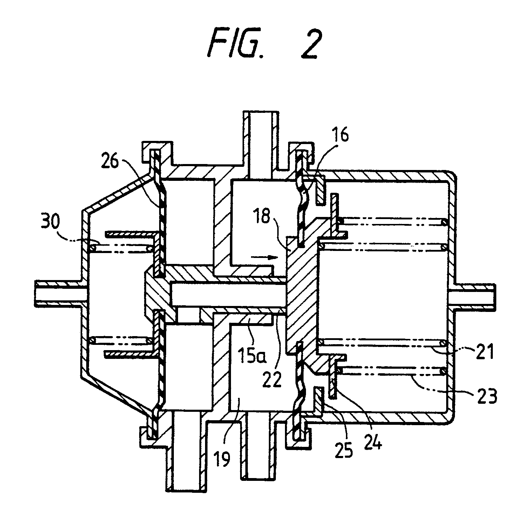

The fuel injection valve 7 is driven and injects fuel for a predetermined time period in synchronism with engine rotation by the electronic control device 34. In the case where the engine is to be started while it is still hot, there is the so-called vapor-lock phenomenon occurring due to high temperature of fuel in the fuel injection valve 7, as pointed out in the Japanese Patent Application Laid-open No. 132068/1985. In the present invention, when fuel temperature in the fuel injection valve 7 exceeds a predetermined value, it is detected by the temperature sensor 8 and informed to the electronic control device 34 which drives the electromagnetic switch valve 33 to switch pressure in the air chamber 27 to atmospheric pressure. As a result, the second diaphram 26 is moved by the air chamber spring 30 to the arrow direction together with the second valve seat 22. Since the valve member 18 is kept in contact with the second valve seat 22 while the latter moves, fuel pressure in the first chamber 19 increases upon which the diaphram 16 moves in an arrow direction shown in Fig. 2. Therefore, the second valve seat 22 can be moved by a very small force to the state shown in Fig. 2. Therefore, the valve member 18 becomes in contact with the second valve seat 22 and is on-off controlled in this position. However, in this case, the spring receiver 24 comes in contact with the valve member 18 and is separated from the spring stopper 25 upon which the second spring 23 acts to the valve member 18 which increases fuel pressure by an amount corresponding to spring force of the second spring 23. That is, fuel pressure in the first chamber 19 is maintained at a second preset value determined by the first and the second springs 21 and 23. Since, therefore, fuel pressure injected by the fuel injection valve 7 is increased,the vapor-lock phenomenon becomes hardly to occur.

When the engine 1 is stopped and the operation of the fuel pump 11 is stopped, pressure acting on the first chamber 19 is removed. Therefore, the valve member 18 is moved by the first spring 21 in the opposite direction to the arrow and urged to the first valve seat 15a to prevent fuel in the first chamber 19 from flowing to the overflow chamber 28 to thereby maintain fuel pressure in the first chamber 19 at the preset value. As a result, a time lag of fuel supply at a restarting of the engine is prevented.

It should be noted that, although the second valve seat 22 is made in contact with the valve member 18 by the air chamber spring 30 having spring force, which is relatively small, when the engine 1 is stopped, the first valve seat 15a can not be separated from the valve member 18 by the first spring 21 which has a spring force larger than that of the spring 30 and thus fuel can not leak through a gap between the first valve seat 15a and the second valve seat 22.

Although, in the described embodiment, the second valve seat 22 is moved by a pressure acting on the second diaphram 26, it may be possible to move it by means of an electromagnet or electric motor.

As described hereinbefore, according to the present which comprises a valve member supported by a diaphram which serves to receive fuel pressure supplied by a fuel pump, a first and a second cylindrical valve seats associated with the valve member to perform on-off operations and means for moving the second valve seat together with the diaphram according to an engine operating condition to vary fuel pressure, the fuel pressure can be controlled easily with a compact and inexpensive structure.

**Claims**

1. A fuel pressure regulator (14) for an internal combustion engine (1) for regulating fuel pressure to be supplied to a fuel injection valve (7), comprising a valve member (18) supported by a first diaphragm (16) providing a pressure receiving plane for pressure of fuel supplied by a fuel pump (11) under pressure, a first cylindrical valve seat (15a) for on-off controlling, together with said valve member (18), a fuel recirculating passage (29) to a fuel tank (10), a tube element (22) supported slidably axially by said first cylindrical valve seat (15a), means for moving said tube element (22) in a moving direction of said diaphragm (16) according to an operating condition of said engine (1), a cover member (17) for supporting said diaphragm (16) and forming an air chamber (20), a first spring means (21) provided between a bottom of said cover member (17) and said valve member (18) for biasing said valve member (18) towards said first valve seat (15a) **characterized** by said tube element (22) forming a second cylindrical valve seat for said valve member (18), and

a second spring means (23) having one end supported by said bottom of said cover member (17) for biasing said valve member (18) in an opposite direction to a direction of movement of said second valve seat (22) together with said valve member (18) when the latter pushes the other end of said second spring means (23).

2. Fuel pressure regulator according to claim 1 characterized in that said second valve seat (22) is supported by a second diaphragm (26).

3. Fuel pressure regulator according to claim 2 characterized in that said first diaphragm forms a first fuel chamber (19) and the second diaphragm forms a second fuel chamber (28), said first fuel chamber being in fluid communication with said fuel pump (11) and said second chamber being in fluid communication with said fuel recirculating passage (29).

## Patentansprüche

1. Kraftstoffdruckregler (14) für eine Brennkraftmaschine (1) zur Regulierung des Kraftstoffdruckes, der einem Kraftstoffeinspritzventil (7) zuzuführen ist, mit einem Ventilelement (18), das von einer ersten Federplatte (16) getragen wird, die eine druckaufnehmende Ebene für den Druck des Kraftstoffs bietet, der von einer Kraftstoffpumpe (11) unter Druck zugeführt wird, einem ersten zylindrischen Ventilsitz (15a) zur An-Aus-Steuerung, zusammen mit dem Ventilelement (18), einem Brennstoffrückführdurchlaß (29) zu einem Brennstofftank (10), einem Rohrelement (22), das axial verschiebbar durch den ersten zylindrischen Ventilsitz (15a) getragen wird, Mitteln zur Bewegung des Rohrelements (22) in einer Bewegungsrichtung der Federplatte (16) entsprechend einer Betriebsbedingung der Maschine (1), einem Abdeckungselement (17) zum Tragen der Federplatte (16) und zum Bilden einer Luftkammer (20), einer ersten Federeinrichtung (21), die zwischen einem Boden des Abdeckungselements (17) und dem Ventilelement (18) vorgesehen ist, zum Vorspannen des Ventilelements (18) in Richtung auf den ersten Ventilsitz (15a), dadurch **gekennzeichnet**, daß das Rohrelement (22) einen zweiten zylindrischen Ventilsitz für das Ventilelement (18) bildet, und eine zweite Federeinrichtung (23) ein Ende besitzt, das von dem Boden des Abdeckungselements (17) abgestützt wird, zur Vorspannung des Ventilelements (18) in einer entgegengesetzten Richtung zu einer Richtung der Bewegung des zweiten Ventilsitzes (22) zusammen mit dem Ventilelement (18), wenn das letztere das andere Ende der zweiten Federeinrichtung (23) drückt.

2. Kraftstoffdruckregler nach Anspruch 1, dadurch **gekennzeichnet**, daß der zweite Ventilsitz (22) durch eine zweite Federplatte (26) gehalten wird.

3. Kraftstoffdruckregler nach Anspruch 2, dadurch **gekennzeichnet**, daß die erste Federplatte eine erste Kraftstoffkammer (19) bildet und die zweite Federplatte eine zweite Brennstoffkammer (28) bildet, wobei die erste Brennstoffkammer in einer Flüssigkeitsverbindung mit der Brennstoffpumpe (11) steht und die zweite Kammer in Flüssigkeitsverbindung mit dem Brennstoffrückführdurchlaß (29) steht.

## Revendications

1. Régulateur de pression de carburant (14) pour moteur à combustion interne (1), servant à régler la pression du carburant amené à une soupape d'injection de carburant (7), comprenant un organe de soupape (18) supporté par un premier diaphragme (16), constituant un plan de réception de pression destiné à la pression du carburant amené sous pression par une pompe à carburant (11), un premier siège de soupape cylindrique (15a) pour assurer une commande par tout-ou-rien, conjointement avec ledit organe de soupape (18), un passage de recirculation de carburant (29) allant vers le réservoir de carburant (10), un élément tubulaire (22) supporté coulissant axialement par ledit premier siège de soupape cylindrique (15a), un moyen pour déplacer ledit élément tubulaire (22) dans la direction de déplacement dudit diaphragme (16), en fonction des conditions de fonctionnement dudit moteur (1), un couvercle (17) pour supporter ledit diaphragme (16) et formant une chambre à air (20), un premier moyen de ressort (21), prévu entre le fond dudit couvercle (17) et ledit organe de soupape (18), pour déplacer ledit organe de soupape (18) en direction du premier siège de soupape (15a), caractérisé par ledit élément tubulaire (22), formant un second siège de soupape pour ledit organe de soupape (18), et un second moyen de ressort (23), comportant une extrémité supportée par ledit fond de couvercle (17), pour déplacer ledit organe de soupape (18) dans un sens opposé au sens de déplacement dudit second siège de soupape (22), conjointement avec ledit organe de soupape (18), lorsque ce dernier pousse l'autre extrémité dudit second moyen de ressort (23).

2. Régulateur de pression de carburant selon la revendication 1, caractérisé en ce que ledit second siège de soupape (22) est supporté par un second diaphragme (26).

3. Régulateur de pression de carburant selon la revendication 2, caractérisé en ce que ledit premier diaphragme forme une première chambre de carburant (19) et le second diaphragme forme une seconde chambre de carburant (28), ladite première chambre de carburant étant en communication hydraulique avec ladite pompe à carburant (11) et ladite seconde chambre étant en communication hydraulique avec ledit passage de recirculation de carburant (29).

# FIG. 1

FIG. 2